# EUROPEAN PATENT SPECIFICATION

(11) **EP 4 236 271 B1**
(45) Date of publication and mention of the grant of the patent: **11.02.2026**
(21) Application number: 20962445.1
(22) Date of filing: 19.11.2020
(51) Int. Cl.: H04M 1/7243, H04M 3/487, H04M 1/72469

(54) **TERMINAL, INPUT DISPLAY METHOD, AND INPUT DISPLAY SYSTEM**
ENDGERÄT, EINGABEANZEIGEVERFAHREN UND EINGABEANZEIGESYSTEM
TERMINAL, PROCÉDÉ ET SYSTÈME D'AFFICHAGE DE SAISIE

(43) Date of publication of application: 30.08.2023
(73) Proprietor: MITSUBISHI ELECTRIC CORPORATION, Chiyoda-ku Tokyo 100-8310 (JP)
(72) Inventor: HIRAI, Masato, Tokyo 100-8310 (JP); MATSUBARA, Tsutomu, Tokyo 100-8310 (JP); YAMAUCHI, Takashi, Tokyo 100-8310 (JP)
(74) Representative: Pfenning, Meinig & Partner mbB
(86) International application number: PCT/JP2020/043230
(87) International publication number: WO 2022/107282

(56) References cited:
- JP-A- 2003 333 561
- JP-A- 2019 161 260
- US-A1- 2017 180 299
- US-A1- 2019 220 109
- SCHULZRINNE COLUMBIA U H: "Indication of Message Composition for Instant Messaging; rfc3994.txt", INDICATION OF MESSAGE COMPOSITION FOR INSTANT MESSAGING; RFC3994.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 January 2005 (2005-01-01), XP015009765

## Description

### TECHNICAL FIELD

The present disclosure relates to a terminal, an input display method, and an input display system.

### BACKGROUND ART

Communication terminal apparatuses that perform communication by communication between two distant points are known. For example, Patent Literature 1 describes a communication terminal apparatus that creates and transmits a message while notifying a communication terminal apparatus of a communication partner of a state in which a message is being edited or created as a transmission process, and that receives and reproduces a message created by the communication terminal apparatus of the communication partner.

In the communication terminal apparatus described in Patent Literature 1, a recipient of a message can recognize a sender of the message through a state in which the message is being edited or created. For example, the recipient of the message can recognize the situation of the sender of the message, such as "message is being entered" or "message has been deleted" and thus can perform communication in consideration of the situation of the communication partner.

Furthermore, Patent Literature 2 describes an electronic device and a method for manipulating user interfaces wherein the method includes displaying on the touch-sensitive display a user interface of a communication application, the user interface including: an instant messaging conversation between the first person and a second person, the instant messaging conversation displaying content balloons with instant messages exchanged between the first person and a second person, and an input area; receiving a signal that indicates the second person is preparing an instant message. Such methods reduce the number, extent, and/or nature of the inputs from a user and produce a more efficient human-machine interface. For battery-operated devices, such methods conserve power and increase the time between battery charges.

### CITATION LIST

### PATENT LITERATURE

Patent Literature 1: Japanese Patent Laid-Open Publication No. 2006-140748
Patent Literature 2: US 2019/220109 A1

### SUMMARY OF INVENTION

### TECHNICAL PROBLEM

However, in the communication terminal apparatus described in Patent Literature 1, although the recipient of the message can recognize that the sender is inputting the message, there is a problem that it is difficult to estimate how long a waiting time is required until the sender completes the input of the message and the message is received. This makes communication between terminals lack realistic feeling. Although the electronic device disclosed in Patent Literature 2 improves the human-machine interface, it still leaves room for improvement in terms of optimal energy consumption.

The present disclosure solves the above problem, and an object thereof is to obtain a terminal, an input display method and an input display system which make it possible to estimate an input time of information in a terminal of a communication partner.

### SOLUTION TO PROBLEM

The invention is set out in the appended set of claims.

### ADVANTAGEOUS EFFECTS OF INVENTION

According to the present disclosure, the display control unit generates the display information for displaying the input mode notified from the terminal of the communication partner on the display region, and the display displays the input mode notified from the terminal of the communication partner in accordance with the generated display information. A user roughly knows a time required for inputting information for each of a plurality of types of input modes included in a terminal, from experience of using a general communication terminal. Therefore, the terminal according to the present disclosure displaying the input mode notified from the terminal of the communication partner on the display makes it possible to estimate an input time of information in the terminal of the communication partner.

### BRIEF DESCRIPTION OF DRAWINGS

FIG. 1 is a block diagram illustrating a configuration of an input display system according to a first embodiment.
FIG. 2 is a block diagram illustrating a configuration of a terminal according to the first embodiment.
FIG. 3 is a flowchart illustrating an input display method according to the first embodiment.
FIG. 4 is an explanatory diagram illustrating a screen of a terminal on a transmission side where voice input is performed and a screen of a terminal on a reception side.
FIG. 5 is an explanatory diagram illustrating a screen of a terminal on a transmission side where keyboard input is performed and a screen of a terminal on a reception side.
FIG. 6 is an explanatory diagram illustrating a screen of a terminal where keyboard input is performed and a screen of a terminal where voice input is performed.
FIG. 7 is a block diagram illustrating a hardware configuration that implements functions of the terminal according to the first embodiment.
FIG. 8 is a block diagram illustrating a hardware configuration for executing software to implement the functions of the terminal according to the first embodiment.
FIG. 9 is a block diagram illustrating a configuration of a terminal according to a second embodiment.
FIG. 10 is a flowchart illustrating an input display method according to the second embodiment.
FIG. 11 is an explanatory diagram illustrating a screen of a terminal on a transmission side where figure drawing is performed and a screen of a terminal on a reception side.
FIG. 12 is an explanatory diagram illustrating a screen of a terminal on a transmission side where an image selection operation is performed and a screen of a terminal on a reception side.
FIG. 13 is an explanatory diagram illustrating a screen of a terminal on a transmission side where camera photographing is performed and a screen of a terminal on a reception side.
FIG. 14 is an explanatory diagram illustrating a screen of a terminal on a transmission side where tool selection and figure drawing using the selected tool are performed and a screen of a terminal on a reception side.

### DESCRIPTION OF EMBODIMENTS

### First Embodiment

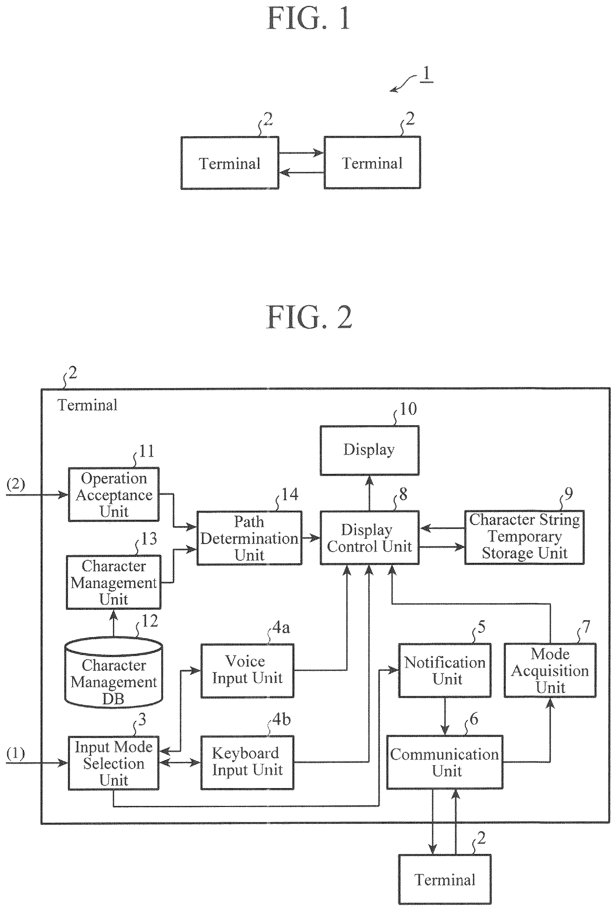

FIG. 1 is a block diagram illustrating a configuration of an input display system 1 according to a first embodiment. The input display system 1 illustrated in FIG. 1 is a system in which information is displayed on displays of terminals 2 by communication therebetween. In the input display system 1, in a case of inputting information (such as a message) to be transmitted to a terminal 2 on a reception side, a terminal 2 on a transmission side transmits information indicating an input mode of information to the terminal 2 on the reception side. The terminal 2 is, for example, a smartphone, a tablet terminal, or a personal computer (PC). The terminal 2 on the reception side displays the input mode received from the terminal 2 on the transmission side on the display. Although FIG. 1 illustrates a case where two terminals 2 communicate with each other, three or more terminals 2 may share display information of each other in the input display system 1.

In the input display system 1, when one input mode is selected from various input modes, the terminal 2 notifies the terminal 2 of the communication partner of the selected input mode, and starts information input in the input mode. When an input mode is notified from the terminal 2 of the communication partner, the terminal 2 displays the notified input mode on the display. Examples of the input mode available in the terminal 2 such as a smartphone, a tablet terminal, or a PC include a voice input mode and a keyboard input mode. The voice input mode is a mode in which a character string corresponding to voice is input by voice recognition. The keyboard input mode is a mode for accepting input of a character string using a software keyboard or a hardware keyboard.

In the keyboard input mode, input is performed for each character using a keyboard. On the other hand, in the voice input mode, only uttering words to the microphone is required. That is, the voice input mode requires less time for information input than the keyboard input mode. A user who has a habit of using a smartphone, a tablet terminal or a PC knows such a difference in time required for information input between input modes from experience. Therefore, when acquiring the input mode notified from the terminal 2 of the communication partner, the terminal 2 generates display information for displaying the acquired input mode on the display, and displays the input mode notified from the terminal of the communication partner on the display in accordance with the generated display information. Accordingly, the user can roughly estimate the time until the information input is completed in the terminal 2 of the communication partner, for example.

FIG. 2 is a block diagram illustrating a configuration of the terminal 2 according to the first embodiment. The terminals 2 included in the input display system 1 illustrated in FIG. 1 both have the components illustrated in FIG. 2. The terminal 2 includes an input mode selection unit 3, a voice input unit 4a, a keyboard input unit 4b, a notification unit 5, a communication unit 6, a mode acquisition unit 7, a display control unit 8, a character string temporary storage unit 9, a display 10, an operation acceptance unit 11, a character management database 12 (hereinafter, referred to as the character management DB 12), a character management unit 13, and a path determination unit 14.

The input mode selection unit 3 accepts selection of an input mode from a plurality of types of input modes executable by the terminal **2.** For example, the input mode selection unit 3 accepts selection of either the voice input mode or the keyboard input mode on the basis of the selection operation (1). For example, the input mode selection unit 3 accepts a selection operation using a pointing device, and activates an input acceptance unit corresponding to an input mode among the voice input unit 4a and the keyboard input unit 4b, selection of the input mode being accepted. As the pointing device, for example, a touch panel is assumed. However, this is merely an example, and the pointing device may be a joystick, a pointing stick, a touchpad, a stylus, a data glove, a trackball, a pen tablet, a mouse, a light pen, or a joypad.

The voice input unit 4a is an input acceptance unit that accepts input of a character string corresponding to a voice by voice recognition. For example, the voice input unit 4a detects the voice of the user and performs voice recognition on the detected voice. For the voice recognition, a voice recognition dictionary database (hereinafter, referred to as the voice recognition dictionary DB) is used. In the voice recognition dictionary DB, for example, an acoustic model and a recognition dictionary are registered. In the acoustic model, acoustic features of phonemes, which are units of human vocalization, are described. In the recognition dictionary, words for voice recognition are described. The voice input unit 4a has a voice recognition engine that recognizes an input voice.

The voice input unit 4a analyzes the input voice, calculates an acoustic feature of the voice, and searches for a word having an acoustic feature closest to the calculated acoustic feature from words described in the recognition dictionary registered in the voice recognition dictionary DB. The voice input unit 4a outputs a character string indicating the word, which is searched for, to the display control unit 8 as a character string indicating a voice recognition result.

Note that the voice input unit 4a may include a data transmission/reception unit instead of the voice recognition engine and the voice recognition dictionary DB. The data transmission/reception unit is a communication device capable of transmitting and receiving data to and from a voice recognition server (not shown) via a communication line such as the Internet, and may be, for example, the communication unit 6. The data transmission/reception unit transmits data indicating the voice detected by the voice input unit 4a to the voice recognition server. The voice recognition server includes a voice recognition engine that recognizes a voice. When receiving the data indicating the voice transmitted from the data transmission/reception unit, the voice recognition server recognizes the voice indicated by the received data, and transmits a character string indicating a voice recognition result to the data transmission/reception unit. The data transmission/reception unit outputs the character string indicating the voice recognition result received from the voice recognition server to the display control unit 8.

The keyboard input unit 4b is an input acceptance unit that accepts input of a character string using a software keyboard or a hardware keyboard. For example, in the software keyboard, input of characters is accepted using a touch panel on a keyboard displayed on the display 10. In the following description, it is assumed that the keyboard input unit 4b uses a software keyboard.

The notification unit 5 notifies the terminal 2 of the communication partner of an input mode, selection of the input mode being accepted by the input mode selection unit 3. For example, the notification unit 5 notifies the terminal 2 of the communication partner of information indicating the input mode by establishing communication connection via the communication unit 6. The communication unit 6 is an apparatus that communicates with the terminal 2 of the communication partner. The form of communication performed by the communication unit 6 may be either the wireless communication or the wired communication.

The mode acquisition unit 7 acquires an input mode notified from the terminal 2 of the communication partner. For example, the mode acquisition unit 7 receives information indicating the input mode from the terminal 2 of the communication partner by establishing communication connection via the communication unit 6. Selection of the input mode acquired by the mode acquisition unit 7 is accepted by the input mode selection unit 3 included in the terminal 2 of the communication partner.

The display control unit 8 generates display information for displaying information (e.g., a character string) on the display region of the display 10, input of the information being accepted by the voice input unit 4a and the keyboard input unit 4b. The character string temporary storage unit 9 temporarily stores data indicating a character string, input of the character string being accepted by the voice input unit 4a or the keyboard input unit 4b. For example, the data indicating the character string is stored in the character string temporary storage unit 9 until curve information is output from the path determination unit 14. The display 10 displays information in accordance with the display information generated by the display control unit 8.

The operation acceptance unit 11 accepts an operation (2) of tracing a line as a user's operation and outputs the content of the accepted operation to the path determination unit 14. For example, the operation acceptance unit 11 accepts an operation (2) using a pointing device. The character management DB 12 is a database in which character attribute table information indicating a correspondence between a character type, a character size, a character height, and a character width is registered.

In the character management unit 13, the character size of characters to be displayed on the display 10 is set in advance. By referring to the character attribute table information registered in the character management DB 12, the character management unit 13 outputs character attribute information indicating the character height corresponding to the preset character size to the path determination unit 14, and outputs character attribute information indicating the character height and the character width corresponding to the preset character size to the display control unit 8.

The path determination unit 14 determines the path of the line input on the display region of the display 10 by the operation accepted by the operation acceptance unit 11. For example, the path determination unit 14 acquires time series data of the point cloud constituting the line input by the user's operation from a pointing device. On the basis of the time series data of the point cloud acquired from the pointing device, the path determination unit 14 generates curve information indicating the length and shape of a curve representing the path of the line input by the user's operation, and outputs the generated curve information to the display control unit 8. The curve also includes a straight line or a bent line. That is, the curve determined by the path determination unit 14 includes lines of various shapes that can be calculated using the time series data of the point cloud on the display region of the display 10.

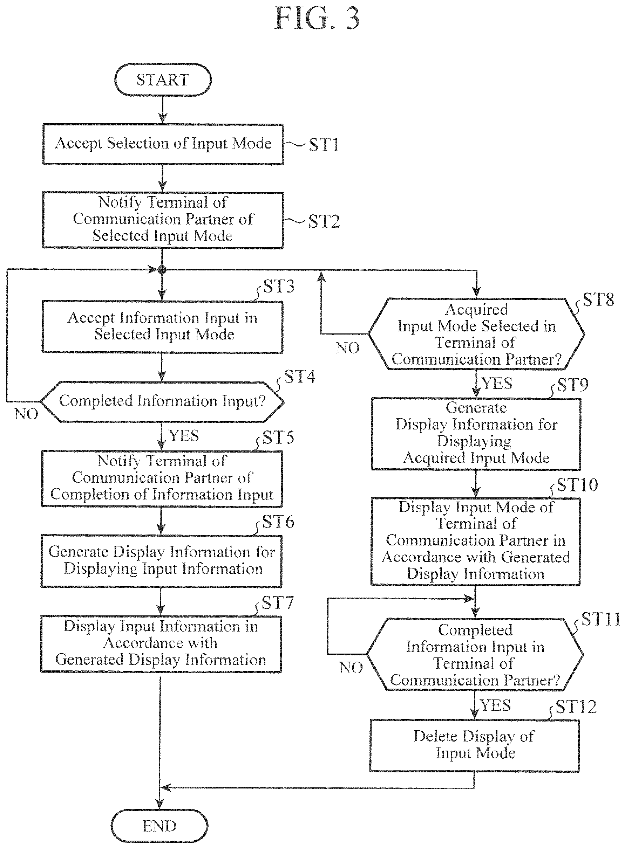

FIG. 3 is a flowchart illustrating an input display method according to the first embodiment.

The input mode selection unit 3 accepts selection of an input mode (Step ST1). Subsequently, the notification unit 5 notifies the terminal 2 of the communication partner with which the communication connection is established via the communication unit 6 of the input mode, the selection of the input mode being accepted by the input mode selection unit 3 (Step ST2). When selection of the voice input mode is accepted, the voice input unit 4a accepts input of information in the voice input mode (Step ST3). When selection of the keyboard input mode is accepted, the keyboard input unit 4b accepts input of information in the keyboard input mode (Step ST3).

Among the voice input unit 4a and the keyboard input unit 4b, the input acceptance unit corresponding to the input mode, the selection of the input mode being accepted, causes the input of the information to be continued when the input of the information is not completed (Step ST4; NO). When the input of the information is completed (Step ST4; YES), the input acceptance unit corresponding to the input mode, the selection of the input mode being accepted, outputs information indicating completion of the input of the information to the input mode selection unit 3. The input mode selection unit 3 outputs the information indicating the completion of the input of the information to the notification unit **5.** The notification unit 5 performs communication connection via the communication unit 6 to notify the terminal 2 of the communication partner of the information indicating the completion of the input of the information (Step ST5).

Subsequently, the display control unit 8 generates display information for displaying the information on the display 10, the input of the information being accepted by the input acceptance unit corresponding to the input mode among the voice input unit 4a and the keyboard input unit 4b, the selection of the input mode being accepted (Step ST6). The display 10 displays the information in accordance with the display information generated by the display control unit 8, the input of the information being accepted by the input acceptance unit corresponding to the input mode among the voice input unit 4a and the keyboard input unit 4b, the selection of the input mode being accepted (Step ST7).

The mode acquisition unit 7 checks whether or not an input mode notified from the terminal 2 of the communication partner has been acquired (Step ST8). For example, the mode acquisition unit 7 receives information indicating the input mode by establishing communication connection via the communication unit 6 from the terminal 2 of the communication partner. The information indicating the input mode acquired by the mode acquisition unit 7 is output to the display control unit 8.

The display control unit 8 generates display information for displaying the acquired input mode on the display 10 (Step ST9). The display 10 displays the input mode notified from the terminal 2 of the communication partner in accordance with the display information generated by the display control unit 8 (Step ST10). By visually recognizing the input mode displayed on the display 10, the user can find which input mode the terminal 2 of the communication partner is in to input information, and can roughly estimate the input time of the information in the found input mode.

The mode acquisition unit 7 checks whether or not input of the information has been completed in the terminal 2 of the communication partner (Step ST11). For example, when the communication unit 6 receives information indicating the completion of the input of the information from the terminal 2 of the communication partner (Step ST11; YES), the mode acquisition unit 7 notifies the display control unit 8 that the input of the information has been completed in the terminal 2 of the communication partner. When the communication unit 6 has not received the information indicating the completion of the input of the information from the terminal 2 of the communication partner (Step ST11; NO), the mode acquisition unit 7 repeats the above checking process.

In a case where the input of the information is completed in the terminal 2 of the communication partner, the display control unit 8 generates display information for hiding the input mode notified from the terminal 2 of the communication partner, and outputs the display information to the display 10. The display 10 deletes (hides) the display of the input mode notified from the terminal 2 of the communication partner from the screen, in accordance with the display information generated by the display control unit 8 (Step ST12).

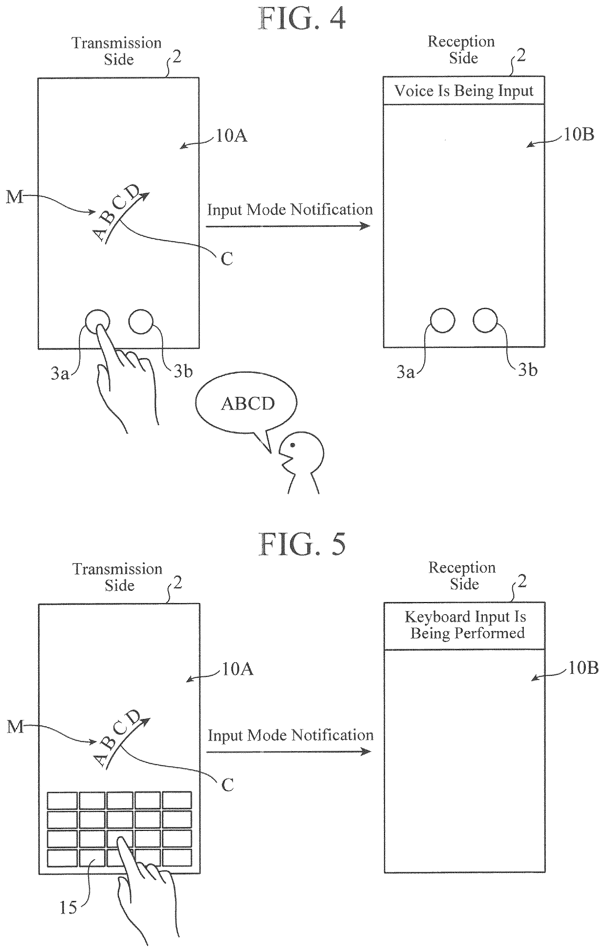

FIG. 4 is an explanatory diagram illustrating a screen 10A of the terminal 2 on the transmission side where voice input is performed and a screen 10B of the terminal 2 on the reception side. The input mode selection unit 3 is implemented as a user interface using the display 10 and a touch panel. In the example illustrated in FIG. 4, the display control unit 8 generates display information for displaying a button image 3a corresponding to the voice input mode and a button image 3b corresponding to the keyboard input mode. The display 10 displays the button image 3a and the button image 3b in accordance with the display information generated by the display control unit **8.**

When the user performs an operation of pressing the button image 3a or the button image 3b using the touch panel, operation information detected by the touch panel is output to the input mode selection unit 3. The input mode selection unit 3 accepts selection of an input mode on the basis of the operation information. In FIG. 4, since the button image 3a is pressed, the input mode selection unit 3 accepts selection of the voice input mode. The notification unit 5 notifies the terminal 2 on the reception side of the input mode (voice input mode) via the communication unit 6, the selection of the input mode being accepted. The terminal 2 on the reception side displays, on the screen 10B, information indicating the voice input mode notified from the terminal 2 on the transmission side. For example, text information such as "voice is being input" is displayed on the screen 10B.

In the terminal 2 on the transmission side, the voice input unit 4a performs voice recognition for the utterance of "ABCD" by the user, and outputs a character string M that is a voice recognition result to the display control unit 8. Accordingly, since the voice input is completed, the notification unit 5 notifies the terminal 2 on the reception side of the completion of the voice input via the communication unit 6. Subsequently, the display control unit 8 uses curve information acquired from the path determination unit 14 and the character string M acquired from the voice input unit 4a to generate display information in which the character string M is provided along a curve C indicated by the curve information. The display information generated by the display control unit 8 is output to the display 10 and further transmitted to the terminal 2 on the reception side via the communication unit 6.

As illustrated in FIG. 4, the display 10 displays the character string M on the screen 10A in accordance with the display information generated by the display control unit 8. When the completion of the voice input is notified from the terminal 2 on the transmission side, the terminal 2 on the reception side deletes the display of the input mode from the screen 10B. Thereafter, the terminal 2 on the reception side displays the character string M on the screen 10B in accordance with the display information received from the terminal 2 on the transmission side.

FIG. 5 is an explanatory diagram illustrating the screen 10A of the terminal 2 on the transmission side where keyboard input is performed and the screen 10B of the terminal 2 on the reception side. When the button image 3b illustrated in FIG. 4 is pressed in the terminal 2 on the transmission side, the input mode selection unit 3 accepts selection of the keyboard input mode. The notification unit 5 notifies the terminal 2 on the reception side of the keyboard input mode via the communication unit 6, the selection of the keyboard input mode being accepted. The terminal 2 on the reception side displays, on the screen 10B, information indicating the input mode (keyboard input mode) notified from the terminal 2 on the transmission side. For example, text information such as "keyboard input is being performed" is displayed on the screen 10B.

In the terminal 2 on the transmission side, the keyboard input unit 4b accepts character input using a software keyboard 15, and outputs the character string M of "ABCD" to the display control unit 8, input of the character string M being accepted. Subsequently, the notification unit 5 notifies the terminal 2 on the reception side of the completion of the keyboard input via the communication unit 6. The display control unit 8 uses the curve information acquired from the path determination unit 14 and the character string M acquired from the keyboard input unit 4b to generate display information in which the character string M is provided along the curve C indicated by the curve information. The display information generated by the display control unit 8 is output to the display 10 and further transmitted to the terminal 2 on the reception side via the communication unit 6.

As illustrated in FIG. 5, the display 10 displays the character string M on the screen 10A in accordance with the display information generated by the display control unit 8. When the completion of the keyboard input is notified from the terminal 2 on the transmission side, the terminal 2 on the reception side deletes (hides) the display of the input mode ("keyboard input is being performed") from the screen 10B. Thereafter, the terminal 2 on the reception side displays the character string M on the screen 10B in accordance with the display information received from the terminal 2 on the transmission side.

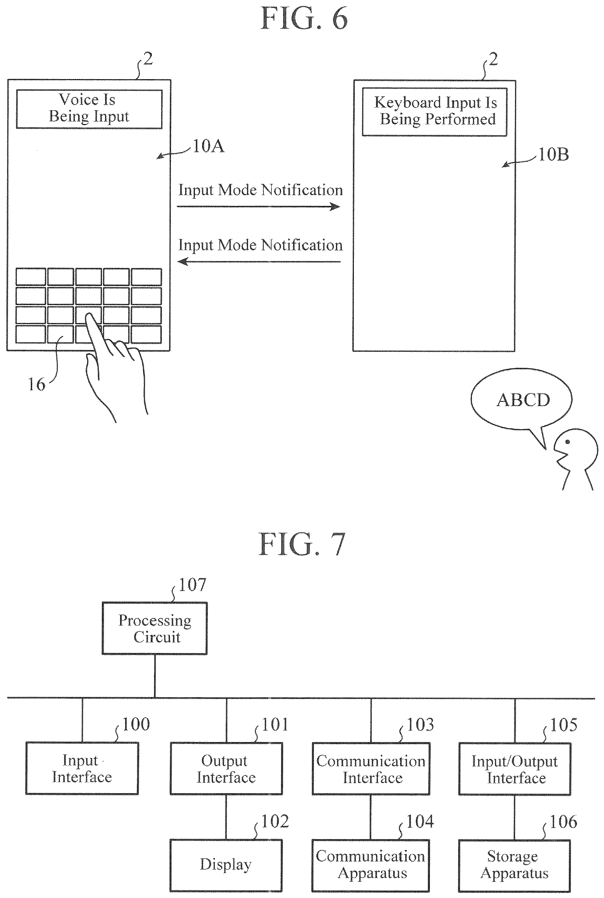

FIG. 6 is an explanatory diagram illustrating the screen 10A of the terminal 2 where keyboard input is performed and the screen 10B of the terminal 2 where voice input is performed. In the terminal 2 having the screen 10A, the input mode selection unit 3 accepts selection of the keyboard input mode. The notification unit 5 notifies the terminal 2 having the screen 10B of information indicating the keyboard input mode via the communication unit 6, the selection of the keyboard input mode being accepted. The terminal 2 displays, on the screen 10B, information indicating the notified input mode (keyboard input mode).

In the terminal 2 having the screen 10B, the input mode selection unit 3 accepts selection of the voice input mode. The notification unit 5 notifies the terminal 2 having the screen 10A of the voice input mode via the communication unit 6, the selection of the voice input mode being accepted. The terminal 2 displays information indicating the notified input mode (voice input mode) on the screen 10A. Thus, the user of each terminal 2 can roughly estimate input time from the input mode of the communication partner. As a result, the realistic feeling of communication by communication between the terminals 2 can be enhanced.

FIG. 7 is a block diagram illustrating a hardware configuration that implements functions of the terminal 2. In FIG. 7, a processing circuit 107 acquires data to the input mode selection unit 3 and the operation acceptance unit 11 via an input interface 100. The processing circuit 107 outputs the display information to a display 102 via an output interface 101. The display 102 is the display 10 illustrated in FIG. 2. The processing circuit 107 inputs and outputs data transmitted and received between a communication apparatus 104 and the terminal 2 of the communication partner via a communication interface 103. The communication apparatus 104 is the communication unit 6 illustrated in FIG. 2. The processing circuit 107 inputs and outputs data to and from a storage apparatus 106 via an input/output interface 105. The storage apparatus 106 stores the character management DB 12 illustrated in FIG. 2.

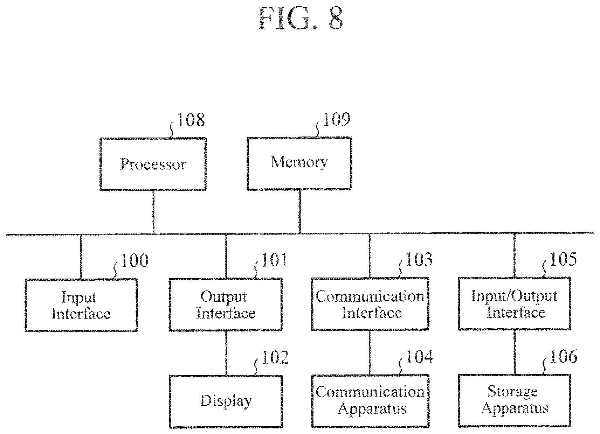

FIG. 8 is a block diagram illustrating a hardware configuration for executing software to implement functions of the terminal 2. In FIG. 8, a processor 108 acquires data to the input mode selection unit 3 and the operation acceptance unit 11 via the input interface 100. The processor 108 outputs the display information to the display 102 via the output interface 101. The display 102 is the display 10 illustrated in FIG. 2. The processor 108 inputs and outputs data transmitted and received between the communication apparatus 104 and the terminal 2 of the communication partner via the communication interface 103. The communication apparatus 104 is the communication unit 6 illustrated in FIG. 2. The processor 108 inputs and outputs data to and from the storage apparatus 106 via the input/output interface 105. The storage apparatus 106 stores the character management DB 12 illustrated in FIG. 2.

The functions of the input mode selection unit 3, the voice input unit 4a, the keyboard input unit 4b, the notification unit 5, the mode acquisition unit 7, the display control unit 8, the character string temporary storage unit 9, the operation acceptance unit 11, the character management unit 13, and the path determination unit 14 are implemented by a processing circuit. That is, the terminal 2 includes a processing circuit that executes each process from Step ST1 to Step ST12 illustrated in FIG. 3. The processing circuit may be dedicated hardware or a central processing unit (CPU) that executes a program stored in a memory.

In a case where the processing circuit is the processing circuit 107 of dedicated hardware illustrated in FIG. 7, the processing circuit 107 corresponds to, for example, a single circuit, a composite circuit, a programmed processor, a parallel programmed processor, an application specific integrated circuit (ASIC), a field-programmable gate array (FPGA), or a combination thereof.

The functions of the input mode selection unit 3, the voice input unit 4a, the keyboard input unit 4b, the notification unit 5, the mode acquisition unit 7, the display control unit 8, the character string temporary storage unit 9, the operation acceptance unit 11, the character management unit 13, and the path determination unit 14 included in the terminal 2 may be implemented by separate processing circuits, or these functions may be collectively implemented by one processing circuit.

In a case where the processing circuit is the processor 108 illustrated in FIG. 8, the functions of the input mode selection unit 3, the voice input unit 4a, the keyboard input unit 4b, the notification unit 5, the mode acquisition unit 7, the display control unit 8, the character string temporary storage unit 9, the operation acceptance unit 11, the character management unit 13, and the path determination unit 14 included in the terminal 2 are implemented by software, firmware, or a combination of software and firmware. Note that the software or firmware is described as a program and stored in a memory 109.

The processor 108 reads out and executes the program stored in the memory 109 to implement the functions of the input mode selection unit 3, the voice input unit 4a, the keyboard input unit 4b, the notification unit 5, the mode acquisition unit 7, the display control unit 8, the character string temporary storage unit 9, the operation acceptance unit 11, the character management unit 13, and the path determination unit 14 included in the terminal **2.**

For example, the terminal 2 includes the memory 109 for storing a program that results in execution of the processing from Step ST1 to Step ST12 in the flowchart illustrated in FIG. 3 when executed by the processor 108.

These programs cause a computer to execute procedures or methods performed by the input mode selection unit 3, the voice input unit 4a, the keyboard input unit 4b, the notification unit 5, the mode acquisition unit 7, the display control unit 8, the character string temporary storage unit 9, the operation acceptance unit 11, the character management unit 13, and the path determination unit 14.

Furthermore, the memory 109 may be a computer readable storage medium storing a program for causing the computer to function as the input mode selection unit 3, the voice input unit 4a, the keyboard input unit 4b, the notification unit 5, the mode acquisition unit 7, the display control unit 8, the character string temporary storage unit 9, the operation acceptance unit 11, the character management unit 13, and the path determination unit 14.

The memory 109 corresponds to, for example, a nonvolatile or volatile semiconductor memory such as a random access memory (RAM), a read only memory (ROM), a flash memory, an erasable programmable read only memory (EPROM), or an electrically-EPROM (EEPROM), a magnetic disk, a flexible disk, an optical disk, a compact disk, a mini disk, or a DVD.

A part of the functions of the input mode selection unit 3, the voice input unit 4a, the keyboard input unit 4b, the notification unit 5, the mode acquisition unit 7, the display control unit 8, the character string temporary storage unit 9, the operation acceptance unit 11, the character management unit 13, and the path determination unit 14 included in the terminal 2 may be implemented by dedicated hardware, and the remaining part may be implemented by software or firmware.

For example, the functions of the input mode selection unit 3, the voice input unit 4a, the keyboard input unit 4b, the notification unit 5, the mode acquisition unit 7, and the display control unit 8 are implemented by the processing circuit 107 that is dedicated hardware, and the functions of the character string temporary storage unit 9, the operation acceptance unit 11, the character management unit 13, and the path determination unit 14 are implemented by the processor 108 reading out and executing the program stored in the memory 109. As described above, the processing circuit can implement the above functions by hardware, software, firmware, or a combination thereof.

As described above, in the terminal 2 according to the first embodiment, the display control unit 8 generates display information for displaying the input mode notified from the terminal 2 of the communication partner on the display region, and causes the display 10 to display the input mode notified from the terminal 2 of the communication partner in accordance with the generated display information. A user empirically knows a rough input time for each of the plurality of types of input modes. Therefore, the terminal 2 displaying the input mode notified from the terminal 2 of the communication partner on the display 10 makes it possible for the user to estimate the input time of information in the terminal 2 of the communication partner, for example. As a result, the realistic feeling of communication by communication between the terminals 2 can be enhanced.

In the terminal 2 according to the first embodiment, the display control unit 8 generates display information for displaying the character string along the curve input on the display region of the display 10, input of the character string being accepted. The display 10 displays the character string provided along the curve on the screen in accordance with the display information. As a result, it is possible to display the character string provided along the curve traced on the screen of the display 10.

### Second Embodiment

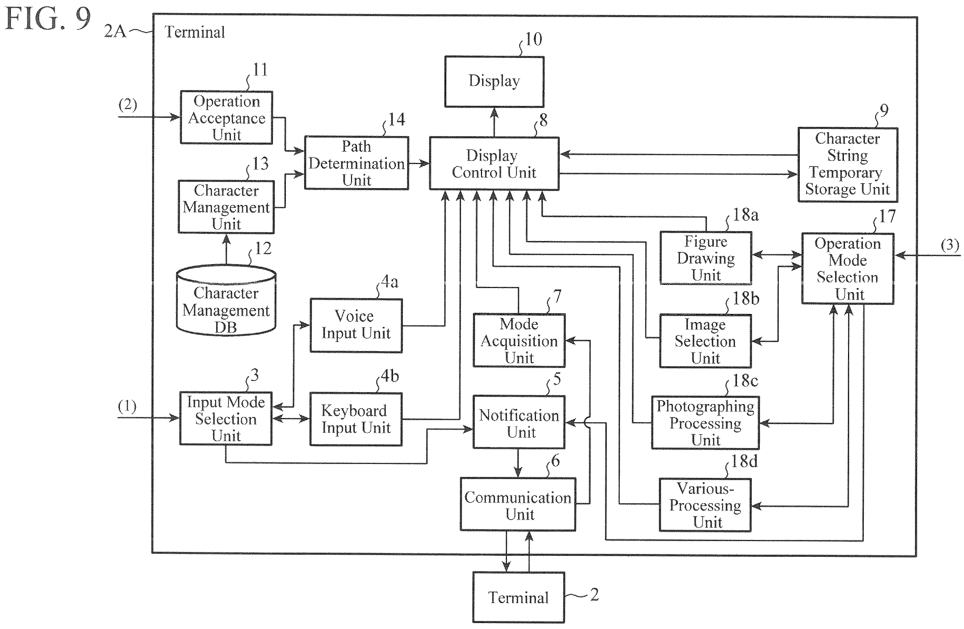

FIG. 9 is a block diagram illustrating a configuration of a terminal 2A according to a second embodiment. In FIG. 9, the same components as those in FIG. 2 are denoted by the same reference signs, and description thereof is omitted. Both of the terminals 2 included in the input display system 1 illustrated in FIG. 1 are assumed to be the terminals 2A having the components illustrated in FIG. 9. The terminal 2A includes an input mode selection unit 3, a voice input unit 4a, a keyboard input unit 4b, a notification unit 5, a communication unit 6, a mode acquisition unit 7, a display control unit 8, a character string temporary storage unit 9, a display 10, an operation acceptance unit 11, a character management DB 12, a character management unit 13, a path determination unit 14, an operation mode selection unit 17, a figure drawing unit 18a, an image selection unit 18b, a photographing processing unit 18c, and a various-processing unit 18d.

The operation mode selection unit 17 accepts selection of an operation mode from among a plurality of types of operation modes executable by the terminal 2A. For example, the operation mode selection unit 17 accepts selection of any of a figure drawing mode, an image selecting mode, a photographing mode, and a various-processing mode on the basis of the selection operation (3). For example, the operation mode selection unit 17 accepts a selection operation using a pointing device, and activates a function execution unit corresponding to an operation mode among the figure drawing unit 18a, the image selection unit 18b, the photographing processing unit 18c, and the various-processing unit 18d, selection of the operation mode being accepted.

The function execution unit executes a function corresponding to the operation mode, the selection of the operation mode being accepted by the operation mode selection unit 17. Examples of the function execution unit included in the terminal 2A include the figure drawing unit 18a, the image selection unit 18b, the photographing processing unit 18c, and the various-processing unit 18d. The figure drawing unit 18a is a function execution unit corresponding to the figure drawing mode, and accepts a trace drawing operation of a line using a touch panel. For example, the figure drawing unit 18a is implemented by a processor included in the terminal 2A executing a drawing application program.

The image selection unit 18b is a function execution unit corresponding to the image selecting mode, and accepts selection of image information using a touch panel from a plurality of pieces of image information stored in a memory. For example, the image selection unit 18b displays selection candidates on the screen of the display 10 from the plurality of pieces of image information stored in the memory, and accepts selection of image information using the touch panel from among the selection candidates. The memory may be included in the terminal 2A or may be an external storage apparatus capable of communication connection with the terminal 2A.

The photographing processing unit 18c is a function execution unit corresponding to the photographing mode and performs photographing with a camera included in the terminal 2A. For example, the photographing processing unit 18c accepts operation input using a touch panel and photographs a subject by controlling the camera included in the terminal 2A. The captured image can be displayed on the display 10 and can also be transmitted to the terminal 2A of the communication partner using the communication unit 6. The photographing processing unit 18c can photograph a still image and a moving image.

The various-processing unit 18d is a function execution unit corresponding to the various-processing mode and performs various types of processing. The various types of processing include processing other than the figure drawing mode, the image selecting mode and the photographing mode, and include, for example, processing of translating a character string input by voice or keyboard into a specified language. The various-processing unit 18d accepts a language designation operation and a translation start operation using a touch panel, and thereby executes translation of the character string. The translation result can be displayed on the display 10 and can also be transmitted to the terminal 2A of the communication partner using the communication unit **6.**

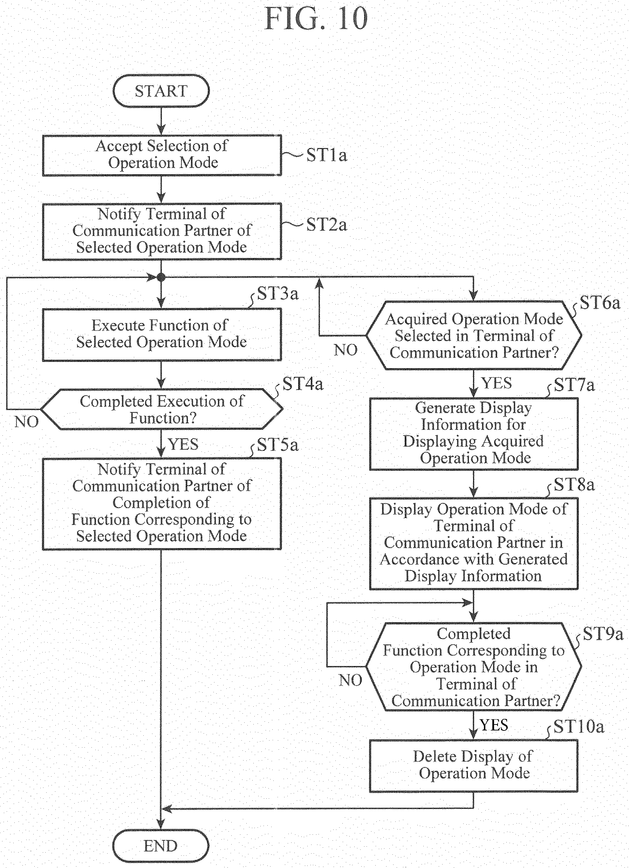

FIG. 10 is a flowchart illustrating an input display method according to the second embodiment.

The operation mode selection unit 17 accepts selection of an operation mode (Step ST1a). Subsequently, the notification unit 5 notifies the terminal 2A of the communication partner with which the communication connection is established via the communication unit 6 of the operation mode, the selection of the operation mode being accepted by the operation mode selection unit 17 (Step ST2a). For example, in a case where the selection of the figure drawing mode is accepted, the figure drawing unit 18a performs figure drawing (Step ST3a). In a case where the selection of the image selecting mode is accepted, the image selection unit 18b performs image selection (Step ST3a). In a case where the selection of the photographing mode is accepted, the photographing processing unit 18c performs camera photographing (Step ST3a). In a case where the selection of the various-processing mode is accepted, the various-processing unit 18d performs one or more of the various types of processing (Step ST3a).

Among the figure drawing unit 18a, the image selection unit 18b, the photographing processing unit 18c, and the various-processing unit 18d, the function execution unit corresponding to the operation mode, the selection of the operation mode being accepted, continues the execution of the function when the execution of the function is not completed (Step ST4a; NO). When the execution of the function is completed (Step ST4a; YES), the function execution unit corresponding to the operation mode, the selection of the operation mode being accepted, outputs information indicating the completion of the execution of the function to the operation mode selection unit 17. The operation mode selection unit 17 outputs the information indicating the completion of the execution of the function to the notification unit 5. The notification unit 5 performs communication connection via the communication unit 6 to notify the terminal 2A of the communication partner of the information indicating the completion of the execution of the function (Step ST5a).

The mode acquisition unit 7 checks whether or not an operation mode selected in the terminal 2A of the communication partner has been acquired (step ST6a). For example, the mode acquisition unit 7 receives information indicating the operation mode from the terminal 2A of the communication partner by establishing communication connection via the communication unit 6. The information indicating the operation mode acquired by the mode acquisition unit 7 is output to the display control unit 8.

The display control unit 8 generates display information for displaying the acquired operation mode on the display 10 (Step ST7a). The display 10 displays information indicating the operation mode notified from the terminal 2A of the communication partner, in accordance with the display information generated by the display control unit 8 (Step ST8a). The user can recognize which operation mode's function is being executed in the terminal 2A of the communication partner, by visually recognizing the operation mode displayed on the display 10.

For example, by including drawing information drawn in the figure drawing mode, image information selected in the image selecting mode, and photographing image information photographed in the photographing mode in a message to the communication partner, these pieces of information can be transmitted to the terminal 2A of the communication partner using the communication unit **6.** In the figure drawing mode, the drawing information is generated by drawing a line using a touch panel. Meanwhile, in the image selecting mode, the image information is obtained just by selecting from the selection candidates, and in the photographing mode, the photographed image information is obtained just by photographing with the camera. That is, in the image selection mode and the photographing mode, information to be transmitted can be obtained in a shorter time than in the figure drawing mode. A user who has a habit of using a smartphone, a tablet terminal, or a PC knows such a difference in time required to obtain information between operation modes from experience. Therefore, the terminal 2A causes the display 10 to display the operation mode notified from the terminal 2A of the communication partner. As a result, the user can roughly estimate the time required to complete the operation in the terminal 2A of the communication partner.

The mode acquisition unit 7 checks whether or not the execution of the function has been completed in the terminal 2A of the communication partner (Step ST9a). For example, when the communication unit 6 receives information indicating the completion of the execution of the function from the terminal 2A of the communication partner (Step ST9a; YES), the mode acquisition unit 7 notifies the display control unit 8 that the execution of the function has been completed in the terminal 2A of the communication partner. When the communication unit 6 has not received the information indicating the completion of the execution of the function from the terminal 2A of the communication partner (Step ST9a; NO), the mode acquisition unit 7 repeats the checking process.

In a case where the execution of the function is completed in the terminal 2A of the communication partner, the display control unit 8 generates display information for hiding the operation mode notified from the terminal 2A of the communication partner, and outputs the display information to the display 10. The display 10 deletes (hides) the display of the operation mode notified from the terminal 2A of the communication partner from the screen, in accordance with the display information generated by the display control unit 8 (Step ST10a).

Note that the functions of the input mode selection unit 3, the voice input unit 4a, the keyboard input unit 4b, the notification unit 5, the communication unit 6, the mode acquisition unit 7, the display control unit 8, the operation acceptance unit 11, the character management unit 13, the path determination unit 14, the operation mode selection unit 17, the figure drawing unit 18a, the image selection unit 18b, the photographing processing unit 18c, and the various-processing unit 18d included in the terminal 2A are implemented by a processing circuit. That is, the terminal 2A includes a processing circuit for executing the processing from Step ST1a to Step ST10a illustrated in FIG. 10. The processing circuit may be the processing circuit 107 of dedicated hardware illustrated in FIG. 7, or may be the processor 108 that executes the program stored in the memory 109 illustrated in FIG. 8.

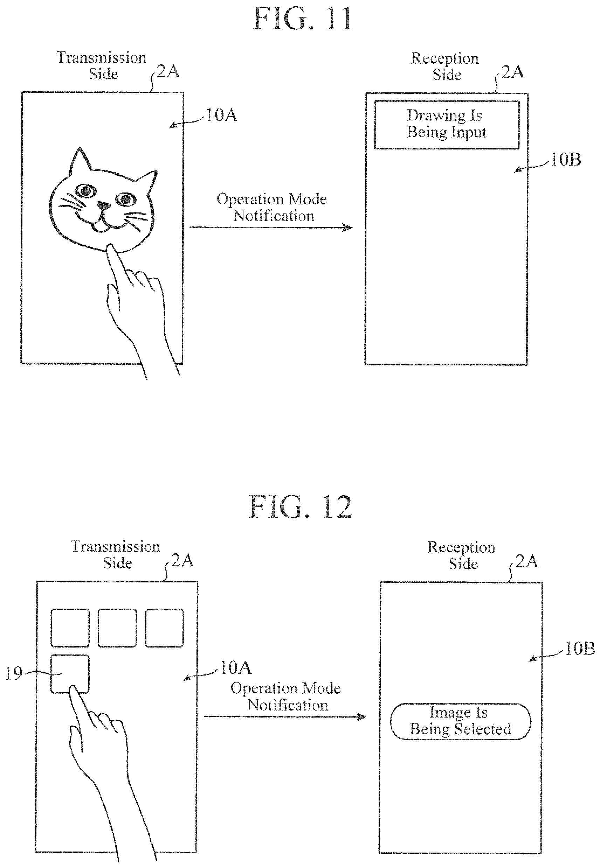

FIG. 11 is an explanatory diagram illustrating a screen 10A of the terminal 2A on the transmission side where the figure drawing is performed, and a screen 10B of the terminal 2A on the reception side. The operation mode selection unit 17 is implemented as a user interface using the display 10 and the touch panel. For example, the display control unit 8 generates display information for displaying button images corresponding to the respective operation modes. The display 10 displays the button images in accordance with the display information generated by the display control unit 8. When the touch panel detects an operation of pressing the button image, the touch panel outputs the detected operation information to the operation mode selection unit 17. The operation mode selection unit 17 accepts selection of an operation mode on the basis of the operation information.

When the operation mode selection unit 17 accepts selection of the figure drawing mode, the notification unit 5 notifies the terminal 2A on the reception side of the figure drawing mode via the communication unit 6, the selection of the figure drawing mode being accepted. The terminal 2A on the reception side displays, on the screen 10B, the operation mode (figure drawing mode) notified from the terminal 2A on the transmission side. For example, text information such as "drawing is being input" is displayed on the screen 10B. A message including the drawing information drawn in the terminal 2A on the transmission side is transmitted to the terminal 2A on the reception side using the communication unit 6. The user of the terminal 2A on the reception side can roughly estimate the time required to complete the operation in the terminal 2A on the transmission side, by referring to the operation mode displayed on the screen 10B.

FIG. 12 is an explanatory diagram illustrating the screen 10A of the terminal 2A on the transmission side where the image selecting operation is performed, and the screen 10B of the terminal 2A on the reception side. When the operation mode selection unit 17 accepts selection of the image selecting mode, the notification unit 5 notifies the terminal 2A on the reception side of the image selecting mode via the communication unit 6, the selection of the image selecting mode being accepted. The terminal 2A on the reception side displays, on the screen 10B, the operation mode (image selecting mode) notified from the terminal 2A on the transmission side. For example, text information such as "image is being selected" is displayed on the screen 10B. A message including the image information selected in the terminal 2A on the transmission side is transmitted to the terminal 2A on the reception side using the communication unit 6. The user of the terminal 2A on the reception side can roughly estimate the time required to complete the operation in the terminal 2A on the transmission side, by referring to the operation mode displayed on the screen 10B.

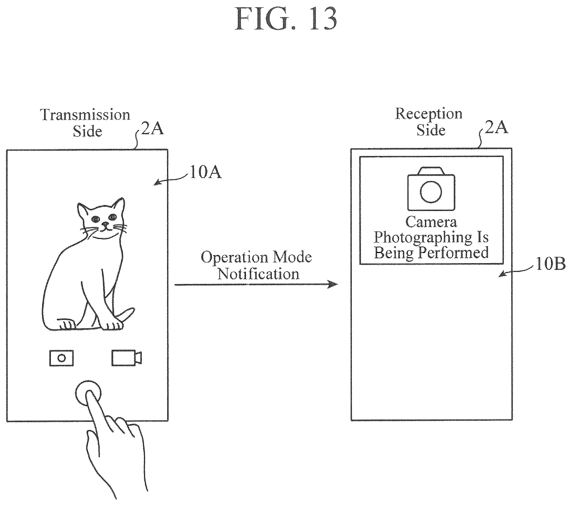

FIG. 13 is an explanatory diagram illustrating the screen 10A of the terminal 2A on the transmission side where the camera photographing is performed, and the screen 10B of the terminal 2A on the reception side. When the operation mode selection unit 17 accepts selection of the photographing mode, the notification unit 5 notifies the terminal 2A on the reception side of the photographing mode via the communication unit 6, the selection of the photographing mode being accepted. The terminal 2A on the reception side displays, on the screen 10B, the operation mode (photographing mode) notified from the terminal 2A on the transmission side. For example, text information such as "camera photographing is being performed" is displayed on the screen 10B. A message including the photographing image information obtained by the terminal 2A on the transmission side is transmitted to the terminal 2A on the reception side using the communication unit **6.** The user of the terminal 2A on the reception side can roughly estimate the time required to complete the operation in the terminal 2A on the transmission side, by referring to the operation mode displayed on the screen 10B.

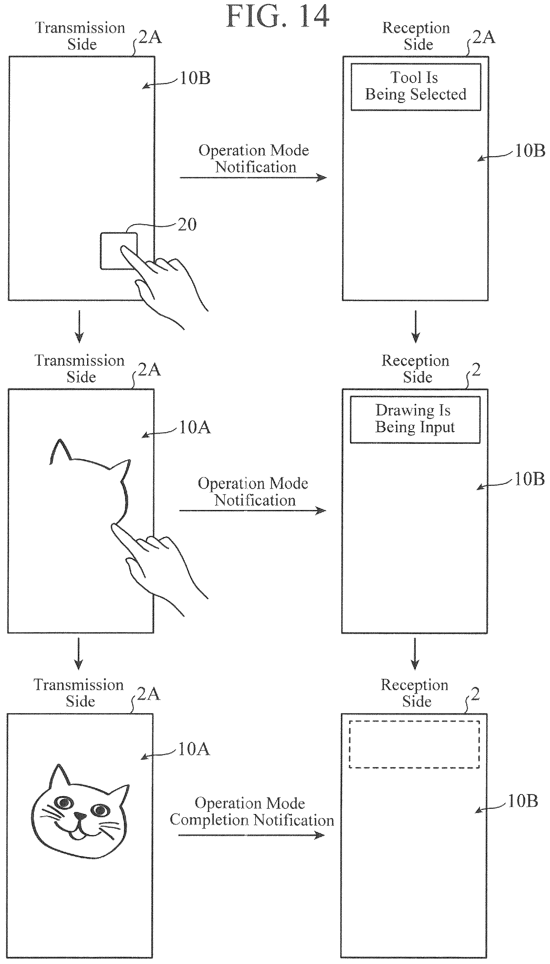

FIG. 14 is an explanatory diagram illustrating the screen 10A of the terminal 2A on the transmission side where tool selection and figure drawing using the selected tool are performed, and the screen 10B of the terminal 2A on the reception side. The figure drawing operation includes a tool selection operation for accepting selection of a thickness of a line to be drawn, a line type, a display effect, and the like. When the operation mode selection unit 17 accepts selection of the figure drawing mode and further accepts selection of a tool selection operation mode, the notification unit 5 notifies, via the communication unit 6, the terminal 2A on the reception side of the operation mode, the selection of the operation mode being accepted. The terminal 2A on the reception side displays, on the screen 10B, the operation mode (tool selection operation mode) notified from the terminal 2A on the transmission side. For example, as illustrated in the upper part of FIG. 14, text information such as "tool is being selected" is displayed on the screen 10B.

The tool selection operation is executed, for example, by manipulating a toolbox 20 displayed on the screen 10A using a touch panel. In the toolbox 20, the thickness of the line to be drawn, the line type, the display effect, and the like are displayed as selection candidates. When the tool selection operation is completed and figure drawing is started, the notification unit 5 notifies the terminal 2A on the reception side of the figure drawing mode via the communication unit 6. The terminal 2A on the reception side hides the text information such as "tool is being selected," and displays the figure drawing mode notified from the terminal 2A on the transmission side on the screen 10B. For example, as illustrated in the middle part of FIG. 14, text information such as "drawing is being input" is displayed on the screen 10B.

As illustrated in the lower part of FIG. 14, when the figure drawing is completed on the screen 10A of the terminal 2A on the transmission side, the notification unit 5 notifies the terminal 2A on the reception side that the figure drawing is completed via the communication unit 6. When the terminal 2A on the reception side is notified that the figure drawing has been completed in the terminal 2A on the transmission side, the text information "drawing is being input" is hidden on the screen 10B. As a result, the user of the terminal 2A on the reception side can infer that the editing or creation of the message in the terminal 2A on the transmission side has been completed.

Moreover, in a case where an input mode different from a previous input mode is notified from the terminal 2A of the communication partner before completion of information input in the terminal 2A of the communication partner is notified, or in a case where an input mode is notified from the terminal 2A of the communication partner before completion of an operation in the terminal 2A of the communication partner is notified, the display control unit 8 generates display information for displaying the newly notified input mode on a display region of the display 10. The display control unit 8 causes the display 10 to display the newly notified input mode in accordance with the generated display information. Thus, since the change in the input mode in the terminal 2A is sequentially notified, the user can estimate the waiting time for message input by the change in the display of the input mode on the display 10.

Furthermore, in a case where an operation mode different from a previous operation mode is notified from the terminal 2A of the communication partner before completion of an operation in the terminal 2A of the communication partner is notified, or in a case where an operation mode is notified from the terminal 2A of the communication partner before completion of information input in the terminal 2A of the communication partner is notified, the display control unit 8 generates display information for displaying the newly notified operation mode on the display 10. The display control unit 8 causes the display 10 to display the newly notified operation mode in accordance with the generated display information. Thus, since the change in the operation mode in the terminal 2A is sequentially notified, the user can estimate the waiting time until the operation is completed by the change in the display of the operation mode on the display 10.

As described above, in the terminal 2A according to the second embodiment, the display control unit 8 generates display information for displaying the operation mode notified from the terminal 2A of the communication partner on the display region, and causes the display 10 to display the operation mode notified from the terminal 2A of the communication partner in accordance with the generated display information. The user empirically knows the rough execution time for each of the plurality of types of operation modes. Therefore, the terminal 2A displaying the operation mode notified from the terminal 2A of the communication partner on the display 10 makes it possible for the user to estimate the time required to complete the operation in the terminal 2A of the communication partner. As a result, the realistic feeling of communication by communication between the terminals 2A can be enhanced.

Note that combinations of the embodiments, modifications of any components of the embodiments, or omissions of any components in the embodiments are possible within the scope of protection conferred by the appended claims.

### INDUSTRIAL APPLICABILITY

The terminal according to the present disclosure can be used, for example, in a system in which communication is performed between terminals by communication.

### REFERENCE SIGNS LIST

1: input display system, 2, 2A: terminal, 3: input mode selection unit, 3a, 3b: button image, 4a: voice input unit, 4b: keyboard input unit, 5: notification unit, 6: communication unit, 7: mode acquisition unit, 8: display control unit, 9: character string temporary storage unit, 10: display, 10A, 10B: screen, 11: operation acceptance unit, 12: character management database (DB), 13: character management unit, 14: path determination unit, 15: keyboard, 17: operation mode selection unit, 18a: figure drawing unit, 18b: image selection unit, 18c: photographing processing unit, 18d: various-processing unit, 20: toolbox, 100: input interface, 101: output interface, 102: display, 103: communication interface, 104: communication apparatus, 105: input/output interface, 106: storage apparatus, 107: processing circuit, 108: processor, 109: memory

## Claims

1. A terminal (2, 2A) comprising:
an input mode selection unit (3) to accept selection of an input mode from a first mode in which a character string corresponding to a voice is input by voice recognition and a second mode for input using a character;
a notification unit (5) to notify a terminal (2, 2A) of a communication partner of the input mode, the selection of the input mode being accepted by the input mode selection unit (3);
an input acceptance unit (4a, 4b) to accept input of information in the input mode, the selection of the input mode being accepted by the input mode selection unit (3);
a mode acquisition unit (7) to acquire an input mode notified from the terminal (2, 2A) of the communication partner;
an operation acceptance unit (11)configured to accept an operation of tracing a line as a user's operation and to output content of the accepted operation to a path determination unit (14);
the path determination unit (14) configured to determine a path of the line input on the display region of a display (10) by the operation accepted by the operation acceptance unit (11) and to output the generated curve information to a display control unit (8); and
the display control unit (8) to generate display information for displaying the information on a display region of the display (10), the input of the information being accepted by the input acceptance unit (4a, 4b),
wherein, when the input mode notified from the terminal (2, 2A) of the communication partner is acquired by the mode acquisition unit (7), the display control unit (8) generates display information for displaying the input mode acquired on the display region, and causes the display (10) to display the input mode notified from the terminal (2, 2A) of the communication partner in accordance with the display information generated, and
when the input mode notified from the terminal (2, 2A) of the communication partner is the first mode, the display control unit (8) causes the display (10) to display information indicating the first mode and
the display control unit (8) is configured to generate display information for displaying a character string along the curve input, generated by the path determination unit (14), on the display region of the display (10), input of the character string being accepted by the input acceptance unit (4a, 4b), and configured to cause the display (10) to display the character string provided along the curve in accordance with the display information generated.

2. The terminal (2A) according to claim 1, further comprising:
an operation mode selection unit (17) to accept selection of an operation mode from a plurality of operation modes indicating respective types of operations which are other than input of a voice and input of a character and which are to be performed on the terminal (2A) by a user; and
a function execution unit (18a to 18d) to execute a function corresponding to the operation mode, the selection of the operation mode being accepted by the operation mode selection unit (17),
wherein the notification unit (5) notifies the terminal (2A) of the communication partner of the operation mode, the selection of the operation mode being accepted by the operation mode selection unit (17),
the mode acquisition unit (7) acquires an operation mode notified from the terminal (2A) of the communication partner, and
the display control unit (8) generates, when the operation mode notified from the terminal of the communication partner is acquired by the mode acquisition unit (7), display information for displaying the operation mode acquired on the display region, and causes the display (10) to display the operation mode notified from the terminal (2A) of the communication partner in accordance with the display information generated.

3. The terminal (2) according to claim 1, wherein the input acceptance unit includes a voice input unit (4a) which accepts input of a character string corresponding to a voice by voice recognition, and a keyboard input unit (4b) which accepts input of a character string using a software keyboard or a hardware keyboard.

4. The terminal (2A) according to claim 2, wherein
the operation mode selection unit (17) accepts the selection of the operation mode from an operation mode in which the user draws a figure on a screen of the terminal, an operation mode in which the user selects image information from a plurality of pieces of image information via the terminal, and an operation mode in which the user performs photographing with a camera of the terminal, and
the function execution unit includes a figure drawing unit (18a) which executes figure drawing, an image selection unit (18b) which selects the image information from the plurality of pieces of image information, and a photographing processing unit (18c) which performs photographing with the camera.

5. The terminal according to claim 1, wherein
the display control unit (8) generates display information for hiding the input mode notified from the terminal of the communication partner in a case where completion of input of information in the terminal of the communication partner is notified, and hides the input mode notified from the terminal of the communication partner on the display in accordance with the display information generated.

6. The terminal according to claim 2, wherein
the display control unit (8) generates display information for hiding the operation mode notified from the terminal of the communication partner in a case where completion of an operation in the terminal of the communication partner is notified, and hides the operation mode notified from the terminal of the communication partner on the display in accordance with the display information generated.

7. The terminal according to claim 2, wherein
in a case where an input mode different from a previous input mode is notified from the terminal of the communication partner before completion of input of information in the terminal of the communication partner is notified, or
in a case where an input mode is notified from the terminal of the communication partner before completion of an operation in the terminal of the communication partner is notified,
the display control unit (8) generates display information for displaying the newly notified input mode on the display region, and causes the display to display the newly notified input mode in accordance with the display information generated, and
in a case where an operation mode different from a previous operation mode is notified from the terminal of the communication partner before completion of an operation in the terminal of the communication partner is notified, or
in a case where an operation mode is notified from the terminal of the communication partner before completion of input of information in the terminal of the communication partner is notified,
the display control unit (8) generates display information for displaying the newly notified operation mode on the display region, and causes the display to display the newly notified operation mode in accordance with the display information generated.

8. An input display method comprising:
a step of accepting, by an input mode selection unit (3), selection of an input mode from a first mode in which a character string corresponding to a voice is input by voice recognition and a second mode for input using a character;
a step of notifying, by a notification unit (5), a terminal (2, 2A) of a communication partner of the input mode, the selection of the input mode being accepted by the input mode selection unit (3);
a step of accepting, by an input acceptance unit (4a, 4b), input of information in the input mode, the selection of the input mode being accepted by the input mode selection unit (3);
a step of acquiring, by a mode acquisition unit (7), an input mode selected in the terminal of the communication partner;
a step of accepting, by a operation acceptance unit (11), an operation of tracing a line as a user's operation and outputting the content of the accepted operation to a path determination unit (14), wherein
the path determination unit (14) determines the path of the line input on the display region of a display (10) by the operation accepted by the operation acceptance unit (11) and outputs the generated curve information to a display control unit (8); and
a step of generating, by a display control unit (8), display information for displaying the information on a display region of a display (10), the input of the information being accepted by the input acceptance unit (4a, 4b),
wherein, when the input mode notified from the terminal of the communication partner is acquired by the mode acquisition unit (7), the display control unit (8) generates display information for displaying the input mode acquired on the display region, and causes the display to display the input mode notified from the terminal of the communication partner in accordance with the display information generated, and
when the input mode notified from the terminal of the communication partner is the first mode, the display control unit (8) causes the display to display information indicating the first mode and
the display control unit (8) generates display information for displaying a character string along the curve input, generated by the path determination unit (14), on the display region of the display (10), input of the character string being accepted by the input acceptance unit (4a, 4b), and causes the display (10) to display the character string provided along the curve in accordance with the display information generated.

9. An input display system (1) in which information is displayed on displays (10) of terminals (2, 2A) by communication, the input display system comprising:
a communication unit (6) to communicate with a terminal (2, 2A) of a communication partner;
an input mode selection unit (3) to accept selection of an input mode from a first mode in which a character string corresponding to a voice is input by voice recognition and a second mode for input using a character;
a notification unit (5) to notify the terminal of the communication partner of the input mode by causing the communication unit to transmit the input mode, the selection of the input mode being accepted by the input mode selection unit (3);
an input acceptance unit (4a, 4b) to accept input of information in the input mode, the selection of the input mode being accepted by the input mode selection unit (3);
a mode acquisition unit (7) to acquire an input mode received by the communication unit from the terminal of the communication partner;
an operation acceptance unit (11)configured to accept an operation of tracing a line as a user's operation and to output content of the accepted operation to a path determination unit (14);
the path determination unit (14) configured to determine a path of the line input on the display region of a display (10) by the operation accepted by the operation acceptance unit (11) and to output the generated curve information to a display control unit (8); and
the display control unit (8) to generate display information for displaying the information on a display region of a corresponding one of the displays, the input of the information being accepted by the input acceptance unit (4a, 4b),
wherein, when the input mode notified from the terminal of the communication partner is acquired by the mode acquisition unit (7), the display control unit (8) generates display information for displaying the input mode acquired on the display region, and causes the corresponding one of the displays to display the input mode notified from the terminal of the communication partner in accordance with the display information generated, and
when the input mode notified from the terminal of the communication partner is the first mode, the display control unit (8) causes the corresponding one of the displays to display information indicating the first mode; and
the display control unit (8) is configured to generate display information for displaying a character string along the curve input, generated by the path determination unit (14), on the display region of the display (10), input of the character string being accepted by the input acceptance unit (4a, 4b), and configured to cause the display (10) to display the character string provided along the curve in accordance with the display information generated.

## Patentansprüche

1. Endgerät (2, 2A), umfassend:
eine Eingabemodus-Auswahleinheit (3), um Auswahl eines Eingabemodus aus einem ersten Modus, in dem eine Zeichenfolge, die einer Stimme entspricht, durch Spracherkennung eingegeben wird, und einem zweiten Modus zur Eingabe unter Verwendung eines Zeichens zu akzeptieren;
eine Mitteilungseinheit (5), um einem Endgerät (2, 2A) eines Kommunikationspartners den Eingabemodus mitzuteilen, wobei die Auswahl des Eingabemodus von der Eingabemodus-Auswahleinheit (3) akzeptiert wird;
eine Eingabe-Akzeptierungseinheit (4a, 4b), um eine Eingabe von Informationen in dem Eingabemodus zu akzeptieren, wobei die Auswahl des Eingabemodus von der Eingabemodus-Auswahleinheit (3) akzeptiert wird;
eine Modus-Erwerbungseinheit (7), um einen Eingabemous, welcher von dem Endgerät (2, 2A) des Kommunikationspartners mitgeteilt wird, zu erwerben;
eine Operationsakzeptierungseinheit (11), die konfiguriert ist, eine Operation des Verfolgens einer Linie als eine Benutzer-Operation zu akzeptieren, und Inhalt der akzeptierten Operation an eine Pfadbestimmungseinheit (14) auszugeben;
wobei die Pfadbestimmungseinheit (14) konfiguriert ist, einen Pfad der Linieneingabe auf dem Anzeigebereich einer Anzeige (10) durch die von der Operationsakzeptierungseinheit (11) akzeptierte Operation zu bestimmen, und die generierte Kurveninformation an eine Anzeigesteuereinheit (8) auszugeben; und
wobei die Anzeigesteuereinheit (8) konfiguriert ist, Anzeigeinformationen zum Anzeigen der Informationen auf einem Anzeigebereich der Anzeige (10) zu generieren, wobei die Eingabe der Informationen von der Eingabe-Akzeptierungseinheit (4a, 4b) akzeptiert wird,
wobei, wenn der von dem Endgerät (2, 2A) des Kommunikationspartners mitgeteilte Eingabemodus durch die Modus-Erwerbungseinheit (7) erworben wird, die Anzeigesteuereinheit (8) Anzeigeinformationen zum Anzeigen des erworbenen Eingabemodus auf dem Anzeigebereich generiert, und die Anzeige (10) dazu veranlasst, den von dem Endgerät (2, 2A) des Kommunikationspartners mitgeteilten Eingabemodus gemäß den generierten Anzeigeinformationen anzuzeigen, und
wenn der von dem Endgerät (2, 2A) des Kommunikationspartners mitgeteilte Eingabemodus der erste Modus ist, die Anzeigesteuereinheit (8) die Anzeige (10) dazu veranlasst, Informationen anzuzeigen, die den ersten Modus angeben, und
die Anzeigesteuereinheit (8) konfiguriert ist, Anzeigeinformationen zum Anzeigen einer Zeichenfolge entlang der Kurveneingabe, die von der Pfadbestimmungseinheit (14) generiert wird, auf dem Anzeigebereich der Anzeige (10) zu generieren, wobei eine Eingabe der Zeichenfolge von der Eingabe-Akzeptierungseinheit (4a, 4b) akzeptiert wird, und konfiguriert ist, die Anzeige (10) dazu zu veranlassen, die entlang der Kurve vorgesehene Zeichenfolge gemäß den generierten Anzeigeinformationen anzuzeigen.

2. Endgerät (2A) nach Anspruch 1, ferner umfassend:
eine Betriebsmodus-Auswahleinheit (17), um eine Auswahl eines Betriebsmodus aus einer Vielzahl von Betriebsmodi zu akzeptieren, die jeweilige Typen von Operationen anzeigen, die andere als eine Eingabe einer Stimme und eine Eingabe eines Zeichens sind und die auf dem Endgerät (2A) von einem Benutzer durchzuführen sind; und
eine Funktionsausführungseinheit (18a bis 18d), um eine Funktion, welche dem Betriebsmodus entspricht, auszuführen, wobei die Auswahl des Betriebsmodus von der Betriebsmodus-Auswahleinheit (17) akzeptiert wird,
wobei die Mitteilungseinheit (5) dem Endgerät (2A) des Kommunikationspartners den Betriebsmodus mitteilt, wobei die Auswahl des Betriebsmodus von der Betriebsmodus-Auswahleinheit (17) akzeptiert wird,
die Betriebsmodus-Erwerbungseinheit (7) einen von dem Endgerät (2A) des Kommunikationspartners mitgeteilten Betriebsmodus erwirbt, und
die Anzeigesteuereinheit (8), wenn der von dem Endgerät des Kommunikationspartners mitgeteilte Betriebsmodus von der Modus-Erwerbungseinheit (7) erworben wird, Anzeigeinformationen zum Anzeigen des erworbenen Betriebsmodus auf dem Anzeigebereich generiert, und die Anzeige (10) dazu veranlasst, den von dem Endgerät (2A) des Kommunikationspartners mitgeteilten Betriebsmodus gemäß den generierten Anzeigeinformationen anzuzeigen.

3. Endgerät (2) nach Anspruch 1, wobei die Eingabe-Akzeptierungseinheit eine Spracheingabeeinheit (4a), welche eine Eingabe einer Zeichenfolge, die einer Stimme entspricht, durch Spracherkennung akzeptiert, und eine Tastatureingabeeinheit (4b), welche eine Eingabe einer Zeichenfolge unter Verwendung einer Software-Tastatur oder einer Hardware-Tastatur akzeptiert, umfasst.

4. Endgerät (2A) nach Anspruch 2, wobei
die Betriebsmodus-Auswahleinheit (17) die Auswahl des Betriebsmodus aus einem Betriebsmodus, in dem der Benutzer eine Figur auf einem Bildschirm des Endgeräts zeichnet, einem Betriebsmodus, in dem der Benutzer Bildinformationen aus einer Vielzahl von einzelnen Bildinformationen über das Endgerät auswählt, und einem Betriebsmodus, in dem der Benutzer ein Fotografieren mit einer Kamera des Endgeräts durchführt, akzeptiert, und
die Funktionsausführungseinheit eine Figurenzeichnungseinheit (18a), welche Figurenzeichnen ausführt, eine Bildauswahleinheit (18b), welche die Bildinformationen aus der Vielzahl von einzelnen Bildinformationen auswählt, und eine Fotografier-Verarbeitungseinheit (18c), welche ein Fotografieren mit der Kamera durchführt, umfasst.

5. Endgerät nach Anspruch 1, wobei
die Anzeigesteuereinheit (8) Anzeigeinformationen zum Verbergen des von dem Endgerät des Kommunikationspartners mitgeteilten Eingabemodus in einem Fall generiert, in dem ein Abschließen der Eingabe von Informationen in das Endgerät des Kommunikationspartners mitgeteilt wird, und den von dem Endgerät des Kommunikationspartners mitgeteilten Eingabemodus auf der Anzeige gemäß den generierten Anzeigeinformationen verbirgt.

6. Endgerät nach Anspruch 2, wobei
die Anzeigesteuereinheit (8) Anzeigeinformationen zum Verbergen des von dem Endgerät des Kommunikationspartners mitgeteilten Betriebsmodus in einem Fall generiert, in dem ein Abschließen einer Operation in dem Endgerät des Kommunikationspartners mitgeteilt wird, und den von dem Endgerät des Kommunikationspartners mitgeteilten Betriebsmodus auf der Anzeige gemäß den generierten Anzeigeinformationen verbirgt.

7. Endgerät nach Anspruch 2, wobei
in einem Fall, in dem ein Eingabemodus, der sich von einem vorherigen Eingabemodus unterscheidet, von dem Endgerät des Kommunikationspartners mitgeteilt wird, bevor ein Abschließen einer Eingabe von Informationen in das Endgerät des Kommunikationspartners mitgeteilt wird, oder
in einem Fall, in dem ein Eingabemodus von dem Endgerät des Kommunikationspartners mitgeteilt wird, bevor ein Abschließen einer Operation in dem Endgerät des Kommunikationspartners mitgeteilt wird,
die Anzeigesteuereinheit (8) Anzeigeinformationen zum Anzeigen des neu mitgeteilten Eingabemodus auf dem Anzeigebereich generiert, und die Anzeige dazu veranlasst, den neu mitgeteilten Eingabemodus gemäß den generierten Anzeigedaten anzuzeigen, und
in einem Fall, in dem ein Betriebsmodus, der sich von einem vorherigen Betriebsmodus unterscheidet, von dem Endgerät des Kommunikationspartners mitgeteilt wird, bevor ein Abschließen einer Operation in dem Endgerät des Kommunikationspartners mitgeteilt wird, oder
in einem Fall, in dem ein Betriebsmodus von dem Endgerät des Kommunikationspartners mitgeteilt wird, bevor ein Abschließen einer Eingabe von Informationen in das Endgerät des Kommunikationspartners mitgeteilt wird,
die Anzeigesteuereinheit (8) Anzeigeinformationen zum Anzeigen des neu mitgeteilten Betriebsmodus auf dem Anzeigebereich generiert, und die Anzeige dazu veranlasst, den neu mitgeteilten Betriebsmodus gemäß den generierten Anzeigedaten anzuzeigen.

8. Eingabeanzeigeverfahren, umfassend:
einen Schritt des Akzeptierens, durch eine Eingabemodus-Auswahleinheit (3), einer Auswahl eines Eingabemodus aus einem ersten Modus, in dem eine Zeichenfolge, die einer Stimme entspricht, durch Spracherkennung eingegeben wird, und einem zweiten Modus zur Eingabe unter Verwendung eines Zeichens;
einen Schritt des Mitteilens, durch eine Mitteilungseinheit (5), einem Endgerät (2, 2A) eines Kommunikationspartners des Eingabemodus, wobei die Auswahl des Eingabemodus von der Eingabemodus-Auswahleinheit (3) akzeptiert wird;
einen Schritt des Akzeptierens, durch eine Eingabe-Akzeptierungseinheit (4a, 4b), einer Eingabe von Informationen in dem Eingabemodus, wobei die Auswahl des Eingabemodus von der Eingabemodus-Auswahleinheit (3) akzeptiert wird;
einen Schritt des Erwerbens, durch eine Modus-Erwerbungseinheit (7), eines in dem Endgerät des Kommunikationspartners ausgewählten Eingabemodus;
einen Schritt des Akzeptierens, durch eine Operationsakzeptierungseinheit (11), einer Operation des Verfolgens einer Linie als eine Benutzer-Operation, und Ausgebens des Inhalts der akzeptierten Operation an eine Pfadbestimmungseinheit (14), wobei
die Pfadbestimmungseinheit (14) den Pfad der eingegebenen Linie auf dem Anzeigebereich einer Anzeige (10) durch die von der Operationsakzeptierungseinheit (11) akzeptierte Operation bestimmt, und die generierte Kurveninformation an eine Anzeigesteuereinheit (8) ausgibt; und
einen Schritt des Generierens, durch eine Anzeigesteuereinheit (8), von Anzeigeinformationen zum Anzeigen der Informationen auf einem Anzeigebereich einer Anzeige (10), wobei die Eingabe der Informationen durch die Eingabe-Akzeptierungseinheit (4a, 4b) akzeptiert wird,
wobei, wenn der von dem Endgerät des Kommunikationspartners mitgeteilte Eingabemodus durch die Modus-Erwerbungseinheit (7) erworben wird, die Anzeigesteuereinheit (8) Anzeigeinformationen zum Anzeigen des erworbenen Eingabemodus auf dem Anzeigebereich generiert, und die Anzeige dazu veranlasst, den von dem Endgerät des Kommunikationspartners mitgeteilten Eingabemodus gemäß den generierten Anzeigeinformationen anzuzeigen, und
wenn der von dem Endgerät des Kommunikationspartners mitgeteilte Eingabemodus der erste Modus ist, die Anzeigesteuereinheit (8) die Anzeige dazu veranlasst, Informationen anzuzeigen, die den ersten Modus angeben, und
die Anzeigesteuereinheit (8) Anzeigeinformationen zum Anzeigen einer Zeichenfolge entlang der von der Pfadbestimmungseinheit (14) generierten Kurveneingabe auf dem Anzeigebereich der Anzeige (10) generiert, wobei die Eingabe der Zeichenfolge von der Eingabe-Akzeptierungseinheit (4a, 4b) akzeptiert wird, und die Anzeige (10) dazu veranlasst, die entlang der Kurve vorgesehene Zeichenfolge gemäß den generierten Anzeigedaten anzuzeigen.

9. Eingabeanzeigesystem (1), in dem Informationen auf Anzeigen (10) von Endgeräten (2, 2A) durch Kommunikation angezeigt werden, wobei das Eingabeanzeigesystem umfasst:
eine Kommunikationseinheit (6), um mit einem Endgerät (2, 2A) eines Kommunikationspartners zu kommunizieren;
eine Eingabemodus-Auswahleinheit (3), um Auswahl eines Eingabemodus aus einem ersten Modus, in dem eine Zeichenfolge, die einer Stimme entspricht, durch Spracherkennung eingegeben wird, und einem zweiten Modus zur Eingabe unter Verwendung eines Zeichens zu akzeptieren;
eine Mitteilungseinheit (5), um dem Endgerät des Kommunikationspartners den Eingabemodus mitzuteilen, indem die Kommunikationseinheit dazu veranlasst wird, den Eingabemodus zu übermitteln, wobei die Auswahl des Eingabemodus von der Eingabemodus-Auswahleinheit (3) akzeptiert wird;
eine Eingabe-Akzeptierungseinheit (4a, 4b), um eine Eingabe von Informationen in dem Eingabemodus zu akzeptieren, wobei die Auswahl des Eingabemodus von der Eingabemodus-Auswahleinheit (3) akzeptiert wird;
eine Modus-Erwerbungseinheit (7), um einen von der Kommunikationseinheit von dem Endgerät des Kommunikationspartners empfangenen Eingabemodus zu erwerben;
eine Operationsakzeptierungseinheit (11), die konfiguriert ist, eine Operation des Verfolgens einer Linie als eine Benutzer-Operation zu akzeptieren, und Inhalt der akzeptierten Operation an eine Pfadbestimmungseinheit (14) auszugeben;
wobei die Pfadbestimmungseinheit (14) konfiguriert ist, einen Pfad der Linieneingabe auf dem Anzeigebereich einer Anzeige (10) durch die von der Operationsakzeptierungseinheit (11) akzeptierte Operation zu bestimmen, und die generierte Kurveninformation an eine Anzeigesteuereinheit (8) auszugeben; und
die Anzeigesteuereinheit (8), um Anzeigeinformationen zum Anzeigen der Informationen auf einem Anzeigebereich einer entsprechenden der Anzeigen zu generieren, wobei die Eingabe der Informationen von der Eingabe-Akzeptierungseinheit (4a, 4b) akzeptiert wird,
wobei, wenn der von dem Endgerät des Kommunikationspartners mitgeteilte Eingabemodus von der Modus-Erwerbungseinheit (7) erworben wird, die Anzeigesteuereinheit (8) Anzeigeinformationen zum Anzeigen des erworbenen Eingabemodus auf dem Anzeigebereich generiert, und die entsprechende der Anzeigen dazu veranlasst, den von dem Endgerät des Kommunikationspartners mitgeteilten Eingabemodus gemäß den generierten Anzeigeinformationen anzuzeigen, und
wenn der von dem Endgerät des Kommunikationspartners mitgeteilte Eingabemodus der erste Modus ist, die Anzeigesteuereinheit (8) die entsprechende der Anzeigen dazu veranlasst, Informationen anzuzeigen, die den ersten Modus angeben; und
die Anzeigesteuereinheit (8) konfiguriert ist, Anzeigeinformationen zum Anzeigen einer Zeichenfolge entlang der Kurveneingabe, die von der Pfadbestimmungseinheit (14) generiert wird, auf dem Anzeigebereich der Anzeige (10) zu generieren, wobei eine Eingabe der Zeichenfolge von der Eingabe-Akzeptierungseinheit (4a, 4b) akzeptiert wird, und konfiguriert ist, die Anzeige (10) dazu zu veranlassen, die entlang der Kurve vorgesehene Zeichenfolge gemäß den generierten Anzeigeinformationen anzuzeigen.

## Revendications

1. Terminal (2, 2A), comprenant :
une unité de sélection de mode d'entrée (3) pour accepter la sélection d'un mode d'entrée à partir d'un premier mode dans lequel une chaîne de caractères correspondant à une voix est entrée par reconnaissance vocale, et d'un second mode pour une entrée à l'aide d'un caractère ;
une unité de notification (5) pour notifier un terminal (2, 2A) d'un partenaire de communication du mode d'entrée, la sélection du mode d'entrée étant acceptée par l'unité de sélection de mode d'entrée (3) ;
une unité d'acceptation d'entrée (4a, 4b) pour accepter une entrée d'informations dans le mode d'entrée, la sélection du mode d'entrée étant acceptée par l'unité de sélection de mode d'entrée (3) ;
une unité d'acquisition de mode (7) pour acquérir un mode d'entrée notifié par le terminal (2, 2A) du partenaire de communication ;
une unité d'acceptation d'opération (11) configurée pour accepter une opération de traçage d'une ligne en tant qu'opération d'un utilisateur et pour délivrer en sortie le contenu de l'opération acceptée vers une unité de détermination de trajet (14) ;
l'unité de détermination de trajet (14) configurée pour déterminer un trajet de l'entrée de ligne sur la région d'affichage d'un affichage (10) par l'opération acceptée par l'unité d'acceptation d'opération (11), et pour délivrer en sortie les informations de courbe générées vers une unité de commande d'affichage (8) ; et
l'unité de commande d'affichage (8) pour générer des informations d'affichage pour afficher les informations sur une région d'affichage de l'affichage (10), l'entrée des informations étant acceptée par l'unité d'acceptation d'entrée (4a, 4b),
dans lequel, lorsque le mode d'entrée notifié à partir du terminal (2, 2A) du partenaire de communication est acquis par l'unité d'acquisition de mode (7), l'unité de commande d'affichage (8) génère des informations d'affichage pour afficher le mode d'entrée acquis sur la région d'affichage, et amène l'affichage (10) à afficher le mode d'entrée notifié à partir du terminal (2, 2A) du partenaire de communication conformément aux informations d'affichage générées, et
lorsque le mode d'entrée notifié à partir du terminal (2, 2A) du partenaire de communication est le premier mode, l'unité de commande d'affichage (8) amène l'affichage (10) à afficher des informations indiquant le premier mode, et
l'unité de commande d'affichage (8) est configurée pour générer des informations d'affichage pour afficher une chaîne de caractères le long de l'entrée de courbe, générée par l'unité de détermination de trajet (14), sur la région d'affichage de l'affichage (10), l'entrée de la chaîne de caractères étant acceptée par l'unité d'acceptation d'entrée (4a, 4b), et configurée pour amener l'affichage (10) à afficher la chaîne de caractères fournie le long de la courbe conformément aux informations d'affichage générées.

2. Terminal (2A) selon la revendication 1, comprenant en outre :
une unité de sélection de mode de fonctionnement (17) pour accepter la sélection d'un mode de fonctionnement parmi une pluralité de modes de fonctionnement indiquant des types respectifs d'opérations qui sont autres que l'entrée d'une voix et l'entrée d'un caractère et qui doivent être effectuées sur le terminal (2A) par un utilisateur ; et
une unité d'exécution de fonction (18a à 18d) pour exécuter une fonction correspondant au mode de fonctionnement, la sélection du mode de fonctionnement étant acceptée par l'unité de sélection de mode de fonctionnement (17),
dans lequel l'unité de notification (5) notifie au terminal (2A) du partenaire de communication le mode de fonctionnement, la sélection du mode de fonctionnement étant acceptée par l'unité de sélection de mode de fonctionnement (17),
l'unité d'acquisition de mode (7) acquiert un mode de fonctionnement notifié à partir du terminal (2A) du partenaire de communication, et
l'unité de commande d'affichage (8) génère, lorsque le mode de fonctionnement notifié à partir du terminal du partenaire de communication est acquis par l'unité d'acquisition de mode (7), des informations d'affichage pour afficher le mode de fonctionnement acquis sur la région d'affichage, et amène l'affichage (10) à afficher le mode de fonctionnement notifié à partir du terminal (2A) du partenaire de communication en fonction des informations d'affichage générées.

3. Terminal (2) selon la revendication 1, dans lequel l'unité d'acceptation d'entrée comprend une unité d'entrée vocale (4a) qui accepte une entrée d'une chaîne de caractères correspondant à une voix par reconnaissance vocale, et une unité d'entrée de clavier (4b) qui accepte une entrée d'une chaîne de caractères à l'aide d'un clavier logiciel ou d'un clavier matériel.

4. Terminal (2A) selon la revendication 2, dans lequel
l'unité de sélection de mode de fonctionnement (17) accepte la sélection du mode de fonctionnement à partir d'un mode de fonctionnement dans lequel l'utilisateur dessine une figure sur un écran du terminal, d'un mode de fonctionnement dans lequel l'utilisateur sélectionne des informations d'image à partir d'une pluralité d'éléments d'informations d'image via le terminal, et d'un mode de fonctionnement dans lequel l'utilisateur réalise une photographie avec un appareil photo du terminal, et
l'unité d'exécution de fonction inclut une unité de dessin de figure (18a) qui exécute un dessin de figure, une unité de sélection d'image (18b) qui sélectionne les informations d'image à partir de la pluralité d'éléments d'informations d'image, et une unité de traitement de photographie (18c) qui réalise la photographie avec l'appareil photo.

5. Terminal selon la revendication 1, dans lequel
l'unité de commande d'affichage (8) génère des informations d'affichage pour masquer le mode d'entrée notifié depuis le terminal du partenaire de communication dans le cas où l'achèvement de l'entrée d'informations dans le terminal du partenaire de communication est notifié, et masque le mode d'entrée notifié à partir du terminal du partenaire de communication sur l'affichage conformément aux informations d'affichage générées.

6. Terminal selon la revendication 2, dans lequel
l'unité de commande d'affichage (8) génère des informations d'affichage pour masquer le mode de fonctionnement notifié à partir du terminal du partenaire de communication dans un cas où l'achèvement d'une opération dans le terminal du partenaire de communication est notifié, et masque le mode de fonctionnement notifié à partir du terminal du partenaire de communication sur l'affichage conformément aux informations d'affichage générées.

7. Terminal selon la revendication 2, dans lequel
dans un cas où un mode d'entrée différent d'un mode d'entrée précédent est notifié à partir du terminal du partenaire de communication avant que l'achèvement de l'entrée d'informations dans le terminal du partenaire de communication soit notifiée, ou
dans un cas où un mode d'entrée est notifié à partir du terminal du partenaire de communication avant que l'achèvement d'une opération dans le terminal du partenaire de communication soit notifié,
l'unité de commande d'affichage (8) génère des informations d'affichage pour afficher le mode d'entrée nouvellement notifié sur la région d'affichage, et amène l'affichage à afficher le mode d'entrée nouvellement notifié conformément aux informations d'affichage générées, et
dans un cas où un mode de fonctionnement différent d'un mode de fonctionnement précédent est notifié à partir du terminal du partenaire de communication avant que l'achèvement d'une opération dans le terminal du partenaire de communication soit notifié, ou
dans un cas où un mode de fonctionnement est notifié à partir du terminal du partenaire de communication avant que l'achèvement de l'entrée d'informations dans le terminal du partenaire de communication soit notifié,
l'unité de commande d'affichage (8) génère des informations d'affichage pour afficher le mode de fonctionnement nouvellement notifié sur la région d'affichage, et amène l'affichage à afficher le mode de fonctionnement nouvellement notifié conformément aux informations d'affichage générées.

8. Procédé d'affichage d'entrée, comprenant :
une étape d'acceptation, par l'intermédiaire d'une unité de sélection de mode d'entrée (3), d'une sélection d'un mode d'entrée à partir d'un premier mode dans lequel une chaîne de caractères correspondant à une voix est entrée par reconnaissance vocale, et d'un second mode pour une entrée à l'aide d'un caractère ;
une étape de notification, par l'intermédiaire d'une unité de notification (5), d'un terminal (2, 2A) d'un partenaire de communication du mode d'entrée, la sélection du mode d'entrée étant acceptée par l'unité de sélection de mode d'entrée (3) ;
une étape d'acceptation, par l'intermédiaire d'une unité d'acceptation d'entrée (4a, 4b), d'une entrée d'informations dans le mode d'entrée, la sélection du mode d'entrée étant acceptée par l'unité de sélection de mode d'entrée (3) ;
une étape d'acquisition, par l'intermédiaire d'une unité d'acquisition de mode (7), d'un mode d'entrée sélectionné dans le terminal du partenaire de communication ;
une étape d'acceptation, par l'intermédiaire d'une unité d'acceptation d'opération (11), d'une opération de traçage d'une ligne en tant qu'opération d'un utilisateur et de délivrance en sortie du contenu de l'opération acceptée vers une unité de détermination de trajet (14), dans lequel
l'unité de détermination de trajet (14) détermine le trajet de l'entrée de ligne sur la région d'affichage d'un affichage (10) par l'opération acceptée par l'unité d'acceptation d'opération (11) et délivre en sortie les informations de courbe générées vers une unité de commande d'affichage (8) ; et
une étape de génération, par l'intermédiaire d'une unité de commande d'affichage (8), d'informations d'affichage pour afficher les informations sur une région d'affichage d'un affichage (10), l'entrée des informations étant acceptée par l'unité d'acceptation d'entrée (4a, 4b),
dans lequel, lorsque le mode d'entrée notifié à partir du terminal du partenaire de communication est acquis par l'unité d'acquisition de mode (7), l'unité de commande d'affichage (8) génère des informations d'affichage pour afficher le mode d'entrée acquis sur la région d'affichage, et amène l'affichage à afficher le mode d'entrée notifié à partir du terminal du partenaire de communication conformément aux informations d'affichage générées, et
lorsque le mode d'entrée notifié à partir du terminal du partenaire de communication est le premier mode, l'unité de commande d'affichage (8) amène l'affichage à afficher des informations indiquant le premier mode, et
l'unité de commande d'affichage (8) génère des informations d'affichage pour afficher une chaîne de caractères le long de l'entrée de courbe, générée par l'unité de détermination de trajet (14), sur la région d'affichage de l'affichage (10), l'entrée de la chaîne de caractères étant acceptée par l'unité d'acceptation d'entrée (4a, 4b), et amène l'affichage (10) à afficher la chaîne de caractères fournie le long de la courbe conformément aux informations d'affichage générées.

9. Système d'affichage d'entrée (1) dans lequel des informations sont affichées sur des affichages (10) de terminaux (2, 2A) par communication, le système d'affichage d'entrée comprenant :
une unité de communication (6) pour communiquer avec un terminal (2, 2A) d'un partenaire de communication ;
une unité de sélection de mode d'entrée (3) pour accepter la sélection d'un mode d'entrée à partir d'un premier mode dans lequel une chaîne de caractères correspondant à une voix est entrée par reconnaissance vocale, et d'un second mode pour une entrée à l'aide d'un caractère ;
une unité de notification (5) pour notifier le terminal du partenaire de communication du mode d'entrée en amenant l'unité de communication à transmettre le mode d'entrée, la sélection du mode d'entrée étant acceptée par l'unité de sélection de mode d'entrée (3) ;
une unité d'acceptation d'entrée (4a, 4b) pour accepter une entrée d'informations dans le mode d'entrée, la sélection du mode d'entrée étant acceptée par l'unité de sélection de mode d'entrée (3) ;
une unité d'acquisition de mode (7) pour acquérir un mode d'entrée reçu par l'unité de communication à partir du terminal du partenaire de communication ;
une unité d'acceptation d'opération (11) configurée pour accepter une opération de traçage d'une ligne en tant qu'opération d'un utilisateur et pour délivrer en sortie le contenu de l'opération acceptée vers une unité de détermination de trajet (14) ;
l'unité de détermination de trajet (14) configurée pour déterminer un trajet de l'entrée de ligne sur la région d'affichage d'un affichage (10) par l'opération acceptée par l'unité d'acceptation d'opération (11), et pour délivrer en sortie les informations de courbe générées vers une unité de commande d'affichage (8) ; et
l'unité de commande d'affichage (8) pour générer des informations d'affichage pour afficher les informations sur une région d'affichage d'un certain correspondant des affichages, l'entrée des informations étant acceptée par l'unité d'acceptation d'entrée (4a, 4b),
dans lequel, lorsque le mode d'entrée notifié à partir du terminal du partenaire de communication est acquis par l'unité d'acquisition de mode (7), l'unité de commande d'affichage (8) génère des informations d'affichage pour afficher le mode d'entrée acquis sur la région d'affichage, et amène le certain correspondant des affichages à afficher le mode d'entrée notifié à partir du terminal du partenaire de communication conformément aux informations d'affichage générées, et
lorsque le mode d'entrée notifié à partir du terminal du partenaire de communication est le premier mode, l'unité de commande d'affichage (8) amène le certain correspondant des affichages à afficher des informations indiquant le premier mode ; et
l'unité de commande d'affichage (8) est configurée pour générer des informations d'affichage pour afficher une chaîne de caractères le long de l'entrée de courbe, générée par l'unité de détermination de trajet (14), sur la région d'affichage de l'affichage (10), l'entrée de la chaîne de caractères étant acceptée par l'unité d'acceptation d'entrée (4a, 4b), et configurée pour amener l'affichage (10) à afficher la chaîne de caractères fournie le long de la courbe conformément aux informations d'affichage générées.
